# EUROPÄISCHE PATENTANMELDUNG

(11) **EP 0 986 241 A2**
(43) Veröffentlichungstag der Anmeldung: **15.03.2000**
(21) Anmeldenummer: 99440229.5
(22) Anmeldetag: 20.08.1999
(51) Int. Cl.: H04M 15/28, H04Q 3/00

(54) **Verfahren zur Bereitstellung von Entgeltinformationen**

(30) Priorität: 08.09.1998 DE 19840910
(71) Anmelder: ALCATEL, 75008 Paris (FR)
(72) Erfinder: Lautenschlager, Wolfgang, 71287 Weissach-Flacht (DE); Stahl, Uwe, 81229 Leonberg (DE)
(74) Vertreter: Zinsinger, Norbert

(57) **Zusammenfassung**

Die Erfindung betrifft ein Verfahren zum Bereitstellen von Entgelt-Informationen sowie eine Dienststeuereinheit (SCP) zur Durchführung des Verfahrens. Während des Aufbaus einer von dem Teilnehmer als rufendem Teilnehmer (A) zu einem gerufenen Teilnehmer (B) veranlaßten Verbindung wird die Dienststeuereinheit (SCP) getriggert. Die Dienststeuereinheit (SCP) wählt aus einer Vielzahl von Netzbetreibern (OP1 bis OP3), auf deren Tarif-Modell-Daten sie Zugriff hat, einen Netzbetreiber oder mehrere Netzbetreiber aus, die einen Dienst für die Verbindung erbringen. Die Dienststeuereinheit (SCP) berechnet mittels der Tarif-Modell-Daten des ausgewählten Netzbetreibers oder der ausgewählten Netzbetreiber und mittels Daten über den rufenden und den gerufenen Teilnehmer (A, B) der Verbindung einen Tarif für die Verbindung. Die Dienststeuereinheit (SCP) sendet eine Signalisierungsnachricht (SM) mit einer dem Tarif zugeordneten Tarifkennung zur Teilnehmervermittlungsstelle (SUBSW) des rufenden Teilnehmers (A), die dann gemäß der von der Dienststeuereinheit (SCP) empfangenen Tarifkennung Entgelt-Informationen (CP) an den Teilnehmer (A) sendet.

## Beschreibung

Die Erfindung betrifft ein Verfahren zum Bereitstellen von Entgelt-Informationen nach dem Oberbegriff von Anspruch 1 sowie eine Dienststeuereinheit zur Bereitstellung von Entgelt-Informationen nach dem Oberbegriff von Anspruch 15.

Die Erfindung geht von dem in heutigen Telekommunikationsnetzen üblicherweise verwendeten Verfahren zur Entgelt-Information des rufenden Teilnehmers aus, wie es beispielsweise in dem Kapitel "11.3.4 Fernvermitttlungssystem" des Buches "Grundlagen der Vermittlungstechnik", G. Siegmund, R. v. Decker's Verlag, G. Schenk, Heidelberg, 1991, auf den Seiten 92 bis 94 beschrieben ist.

Während des Bestehens einer von dem rufenden Teilnehmer veranlaßten Verbindung werden von der dem Teilnehmer zugeordneten Teilnehmervermittlungsstelle zur Entgelt-Information des Teilnehmers Gebührenimpulse über die Teilnehmeranschlußleitung an das Endgerät des Teilnehmers gesendet. Die Gebührenimpulse werden im Nutzkanal übertragen und die Anzahl der Impulse ist ein Maß für die Kosten der Verbindung. Die Gebührenimpulse werden von einem Gebührenimpulsgeber der Teilnehmervermittlungsstelle erzeugt, der von einem in der Knotenvermittlungsstelle angesiedelten Umwerter gesteuert wird. Dieser Umwerter bestimmt den Leitweg der Verbindung und die diesem Leitweg zugeordnete Gebührenzone. Der Gebührenimpulsgeber wird entsprechend der bestimmten Gebührenzone vom Umwerter angesteuert.

Dieses bekannte Verfahren arbeitet jedoch nicht mehr einwandfrei, wenn das Telekommunikationsnetze aus mehreren Teilnetzen unterschiedlicher Netzbetreiber besteht. Wenn beispielsweise beim Aufbau einer Verbindung ein vom Anschlußnetzbetreiber des rufenden Teilnehmers unterschiedlicher Netzbetreiber gewählt wird, ist keine Bereitstellung von Gebührenimpulsen für diese Verbindung mehr möglich, da keine entsprechenden Gebührensignalisierung zwischen Netzbetreibern standardisiert ist.

Der Erfindung liegt nun die Aufgabe zugrunde, die Bereitstellung von Entgelt-Informationen in Telekommunikationsnetzen zu verbessern.

Diese Aufgabe wird gelöst durch ein Verfahren zum Bereitstellen von Entgelt-Informationen nach der Lehre von Anspruch 1 sowie durch eine Dienststeuereinheit zur Bereitstellung von Entgelt-Informationen nach der Lehre von Anspruch 15.

Der Erfindung liegt hierbei der Gedanke zugrunde, während des Verbindungsaufbaus eine Dienststeuereinheit zu triggern, die die Tarif-Modelle verschiedener Netzbetreiber kennt und mittels dieser betreiberspezifischen Daten eine betreiberunspezifische Tarifkennung für die Verbindung ermittelt und an die Teilnehmervermittlungsstelle des rufenden Teilnehmers signalisiert. Die Teilnehmervermittlungsstelle sendet sodann gemäß dieser Tarifkennung Entgelt-Informationen an den Teilnehmer.

Der Vorteil der Erfindung besteht darin, daß der Teilnehmer auch über Verbindungen, die von einem fremden oder von verschiedenen Netzbetreibern vergebührt werden, stets korrekte Entgelt-Informationen von seiner Teilnehmervermittlungsstelle erhält. Gleichzeitig können die bestehenden Entgelt-Informationsverfahren zwischen Teilnehmer und Teilnehmervermittlungsstelle auf einfache Weise weiter verwendet werden, so daß bestehende Endgeräte weiterverwendet werden können und Teilnehmer die ihnen bekannte Darstellungsweise der Entgelt-Information vorfinden.

Weitere Vorteile der Erfindung bestehen darin, daß sie mittels geringem Aufwand in bestehenden Telekommunikationsnetze integriert werden kann. Es ist keine Änderung von Signalisierungsstandards notwendig. Die Lösung ist dynamisch an neue Netzbetreiberkonstellationen ohne Vornahme von Änderungen anpaßbar.

Vorteilhafte Ausgestaltungen der Erfindung sind den Unteransprüchen zu entnehmen.

Es ist hierbei vor allem vorteilhaft, einen Satz von betreiberunspezifischen Tarifen zu definieren, der als Tarifraster in der Dienststeuereinheit und in den Teilnehmervermittlungsstellen verwendet wird. Hierdurch vereinfacht sich der Signalisierungsaufwand, der Aufwand für die Integration der Erfindung in bestehende Telekommunikationsnetze wird weiter erheblich reduziert. Es ist hierbei auch eine Rasterung ausreichend, welche nicht in jedem Fall eine genaue Abbildung eines betreiberspezifischen Tarifs auf einen betreiberunspezifischen Tarif ermöglicht. Die hieraus resultierenden näherungsweise korrekten Entgelt-Informationen sind in der Regel ausreichend.

Weiter ist es vor allem vorteilhaft, wenn die Netzbetreiber ihre betreiberspezifischen Tarif-Modell-Daten selbständig über ein Datennetz an die Dienststeuereinheit übermitteln und die Dienststeuereinheit aus diesen Daten eine Tarif-Modell-Abbildungsmatrix erzeugt. Hierdurch wird eine sehr schnelle Berechnung der betreiberunspezifischen Tarifkennung und eine Reduzierung der hierfür notwendigen Rechnerkapazität erreicht.

Im folgenden wir die Erfindung anhand mehrerer Ausführungsbeispiele unter Zuhilfenahme beiliegender Zeichnungen beispielhaft erläutert.
- Fig. 1: zeigt ein Blockschaltbild eines Telekommunikationsnetzes mit einer erfindungsgemäßen Dienststeuerein heit.
- Fig. 2: zeigt eine funktionelle Darstellung der Dienststeuereinheit nach Fig. 1 für ein erstes Ausführungsbeispiel.

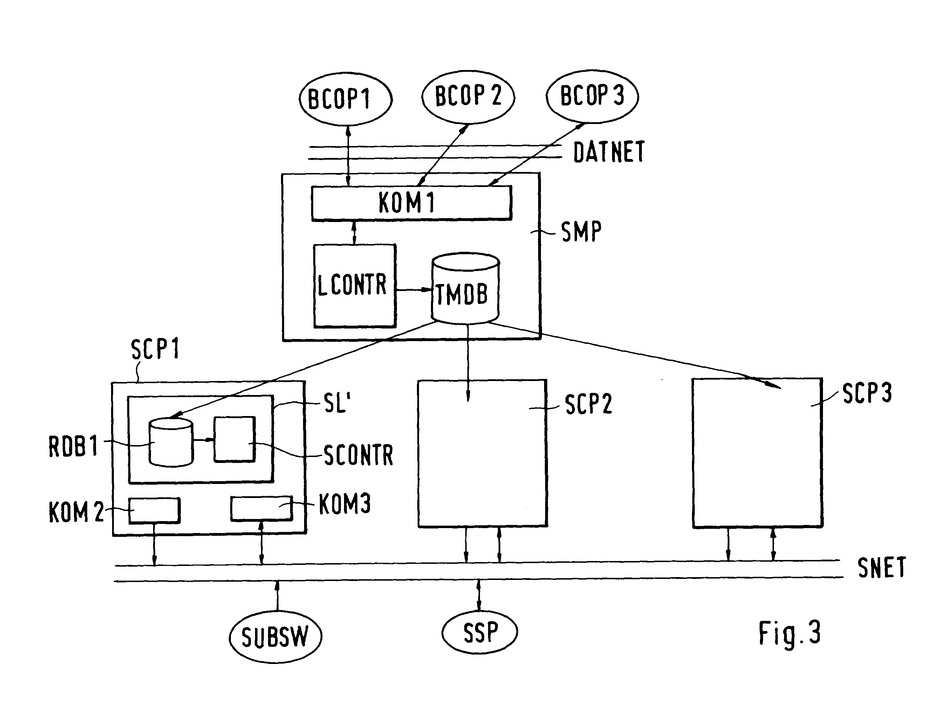

- Fig. 3: zeigt eine funktionelle Darstellung der Dienststeuereinheit nach Fig. 1 für ein zweites Ausführungsbeispiel.

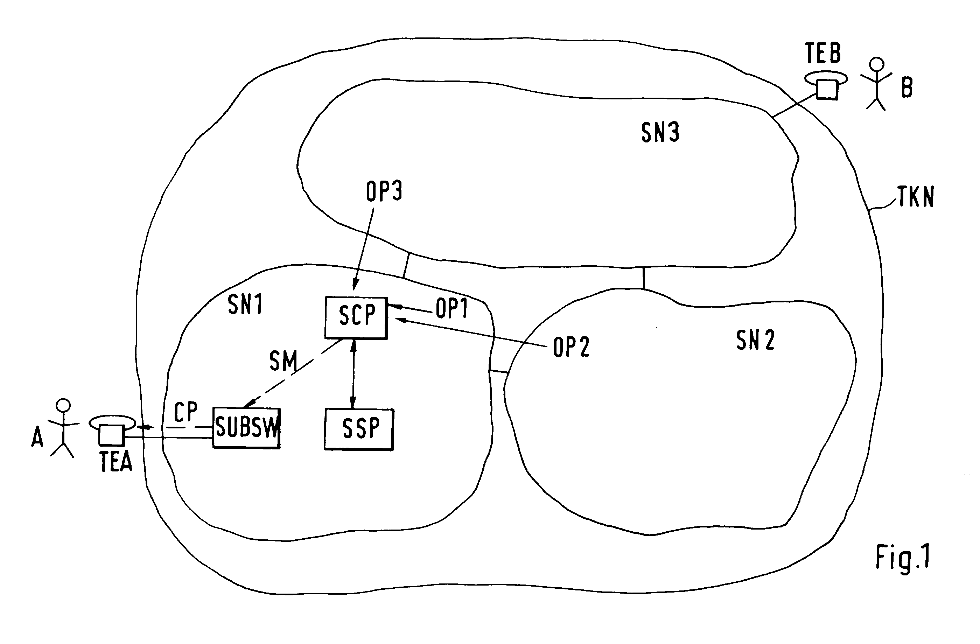

Fig. 1 zeigt ein Telekommunikationsnetz TKN mit drei Teilnetzen SN1 bis SN3 sowie zwei Endgeräte TEA und TEB, die einem Teilnehmer A bzw. B zugeordnet sind.

Bei den Endgeräten TEA und TEB handelt es sich um Fernsprechendgeräte, beispielsweise um Telefone.

Die Anzahl der Teilnetze SN1 bis SN3 ist beispielhaft gewählt. Bei den Teilnetzen SN1 bis SN3 handelt es sich jeweils um übliche Fernsprechnetze, beispielsweise um ISDN Fernsprechnetze (ISDN = Integrated Services Digital Network). Es ist jedoch auch möglich, daß die Teilnetzen SN1 bis SN3 weiter den Aufbau von Daten- oder Video-Verbindungen ermöglichen oder daß es sich bei ihnen um Mobilfunk-Netze handelt. Die Teilnetze SN1 bis SN3 sind miteinander verbunden, so daß Verbindungen möglich sind, die über zwei oder mehr der Teilnetze SN1 bis SN3 geführt sind.

Die Teilnetze SN1 bis SN3 sind jeweils verschiedenen Netzbetreibern OP1, OP2 bzw. OP3 zugeordnet. Die an einer Verbindung beteiligten Teil netze erbringen Dienste für eine Verbindung, die sich in Übertragungsdienste und sonstige Dienste, beispielsweise Auskunftsdienste, gliedern. Für die für die Verbindung erbrachten Dienste erhalten die jeweiligen Netzbetreiber Entgelt vom Teilnehmer oder von einem anderen Netzbetreiber, der seinerseits diese Entgelt vom Teilnehmer einzieht.

Der genaue Aufbau der Teilnetze SN1 bis SN3 wird nun beispielhaft am Teilnetz SN1 erläutert.

Das Teilnetz SN1 wird von mehreren miteinander verbundenen Vermittlungsstellen gebildet. Die Endgeräte der Teilnehmer des Teilnetzes SN1 sind über Teilnehmervermittlungsstellen mit dem Teilnetz SN1 verbunden. Von diesen Teilnehmervermittlungsstellen ist in Fig. 1 beispielhaft eine Teilnehmervermittlungsstelle SUBSW gezeigt, mit der das Endgerät TEA verbunden ist. Weiter verfügt das Teilnetz SN1 über eine oder mehrere Dienstvermittlungsstellen, von denen in Fig. 1 beispielhaft eine Dienstvermittlungsstelle SSP gezeigt ist. Das Teilnetz SN1 weist weiter eine Dienststeuereinheit SCP auf, die über das Signalisierungsnetz des Teil netzes SN1 mit den Dienstvermittlungsstellen des Teilnetzes SN1 verbunden ist. Es ist hierbei auch möglich, daß Dienstvermittlungsstellen verschiedener Teil netze auf die Dienststeuereinheit SCP zugreifen oder daß die Dienstvermittlungsstellen des Teilnetzes SN1 auf eine Dienststeuereinheit eines vom Netzbetreiber OP1 verschiedenen Netzbetreiber oder auch auf eine Dienststeuereinheit eines separaten Dienstbetreibers zugreifen. So ist es beispielsweise möglich, daß die Dienstvermittlungsstellen sämtlicher Teilnetze SN1 bis SN3 auf eine zentrale Dienststeuereinheit zugreifen, die von einem separaten Dienstbetreiber betrieben wird.

Die Dienstvermittlungsstelle SSP richtet, sobald sie beim Aufbau einer über sie geführten Verbindung spezielle Trigger-Ereignisse erkennt, eine Dienstanforderungsnachricht an die Dienststeuereinheit SCP, die diese auffordert, den im Weiteren beschriebenen Dienst zur Bereitstellung von Entgelt-Information zu erbringen.

Folgende Trigger-Ereignisse sind besonders vorteilhaft:

In einem ersten Ausführungsbeispiel wird für jede Verbindung, die von einem Teilnehmer des Teilnetzes SN1 als rufendem Teilnehmer veranlaßt wird, eine solche Dienstanforderungsnachricht an die Dienststeuereinheit SCP gesendet. Das Eintreten dieses Trigger-Ereignises ist für die Dienstvermittlungsstelle SSP anhand der Rufnummer des rufenden Teilnehmers erkennbar.

In einem zweiten Ausführungsbeispiel wird für jede Verbindung, die von einem Teilnehmer des Teilnetzes SN1 als rufendem Teilnehmer veranlaßt wird und die zu anderen Netzbetreibern geführt wird, eine solche Dienstanforderungsnachricht an die Dienststeuereinheit SCP gesendet. Das Eintreten dieses Trigger-Ereignises ist für die Dienstvermittlungsstelle SSP anhand eines vom Teilnehmer der Rufnummer vorangestellten Prefixes erkennbar, das den Verbindungsnetzbetreiber für die Verbindung angibt (carrier selection). Es ist auch möglich, daß die Verbindungsnetzbetreiberauswahl für Teilnehmer schon im Voraus fest eingestellt ist, so daß Rufe von bestimmten Teilnehmern des Teilnetzes SN1 immer zu einem anderen Netzbetreiber geleitetet werden (preselection). Rufe von einem solchen Teilnehmer stellen dann für die Dienstvermittlungsstelle SSP immer ein Trigger-Ereignis dar, das das Senden einer Dienstanforderungsnachricht auslöst.

Es ist auch möglich, daß das Eintreten dieses Trigger-Ereignises ist von der Dienstvermittlungsstelle SSP anhand der Rufnummer des rufenden und des gerufenen Teilnehmers erkannt wird.

Dieses Ausführungsbeispiel hat den Vorteil, daß nur für solche Verbindungen die Dienststeuereinheit SCP aktiviert wird, für die die bestehenden Entgelt-Informationsverfahren nicht immer korrekt arbeiten. Nur für solche Verbindungen wird sodann der erhöhte Aufwand, der in der Aktivierung der Dienststeuereinheit SCP besteht, erbracht.

In einem dritten Ausführungsbeispiel wird für jede Verbindung, die von einem Teilnehmer einer speziellen Gruppe von Teilnehmern des Teilnetzes SN1 als rufendem Teilnehmer veranlaßt wird eine solche Dienstanforderungsnachricht an die Dienststeuereinheit SCP gesendet. Das Eintreten dieses Trigger-Ereignises ist für die Dienstvermittlungsstelle SSP daran erkennbar, ob die Rufnummer des rufenden Teilnehmers in einer Liste spezieller Rufnummer eingetragen wird. Hieraus ergibt sich die Möglichkeit, daß Teilnehmer des Teilnetzes SN1 selbst bestimmen können, ob ihnen dieser neue Entgelt-Informations-Dienst zur Verfügung gestellt werden soll oder nicht. Wenn sie diesen Dienst in Anspruch nehmen möchten, werden sie in die Liste als Mitglied der speziellen Gruppe von Teilnehmern eingetragen. Für die Bereitstellung dieses Dienstes oder für die Eintragung in die Liste kann hierbei eine zusätzliche Gebühr von den Teilnehmern erhoben werden. Es ist weiter Vorteilhaft, zusätzliche wie beim zweiten Ausführungsbeispiel zu überprüfen, ob die Verbindung zu anderen Netzbetreibern geführt wird.

Es ist natürlich auch möglich, bei allen Verbindungen eine Dienstanforderungsnachricht an die Dienststeuereinheit SCP zu senden. Weiter ist es auch möglich, Teile der oben beschriebenen Selektionslogika in die Dienststeuereinheit SCP zu verlagern.

Die Dienststeuereinheit SCP hat Zugriff auf die Tarif-Modell-Daten der Netzbetreiber OP1 bis OP3. Diese Daten werden ihr von den Netzbetreibern OP1 bis OP3 übermittelt. Sobald die Dienststeuereinheit SCP durch den Empfang einer den Entgelt-Informations-Dienst anfordernden Dienstanforderungsnachricht getriggert wird, führt sie folgende Funktionen durch: Die Dienststeuereinheit SCP wählt aus den Netzbetreibern, auf deren Tarif-Modell-Daten sie Zugriff hat, hier die Netzbetreiber OP1 bis OP3, einen Netzbetreiber oder mehrere Netzbetreiber aus, die einen Dienst für die Verbindung erbringen. Diese Auswahl wird beispielsweise durch Auswertung der der Verbindung zugeordneten rufenden und gerufenen Rufnummer oder der Auswertung eines Rufnummern-Prefixes ermittelt. Die Dienststeuereinheit SCP berechnet sodann mittels der Tarif-Modell-Daten des ausgewählten Netzbetreibers oder der ausgewählten Netzbetreiber und mittels Daten über den rufenden und den gerufenen Teilnehmer der Verbindung einen der Verbindung zuzuordnenden netzbetreiberunspezifischen Tarif. Anschließend sendet sie eine Signalisierungsnachricht SM mit einer dem berechneten Tarif zugeordneten Tarifkennung zur Teilnehmervermittlungsstelle des die Verbindung veranlaßten rufenden Teilnehmers.

Zur Erbringung der oben beschriebenen Funktionsweisen ist es vorteilhaft, die Dienstvermittlungsstelle SSP und die Dienststeuereinheit SCP gemäß der IN-Architektur (IN = Intelligent Network) zu realisieren.

Beim Aufbau einer Verbindung zwischen den Teilnehmern A und B ergibt sich so folgender Ablauf: Der Teilnehmer A sendet zum Aufbau der Verbindung mittels seines Endgerätes TEA eine Verbindungsanforderung an die Teilnehmervermittlungsstelle SUBSW. Mit der Verbindungsanforderung fordert er, beispielsweise durch Vorwahl eines bestimmten Prefixes (carrier selection), den Aufbau einer Verbindung zum Teilnehmer B über das Teil netz SN2 des Netzbetreibers OP2 an, der als Verbindungsnetzbetreiber fungieren soll, der die Verbindung vergebührt. Die Verbindungsanforderung wird gemäß der in ihr enthaltenen Zielinformation von Vermittlungsstelle zu Vermittlungsstelle durch die Teilnetze SN1 bis SN3 weitergeleitet und anschließend wird ein entsprechender Nutzkanal zwischen den Endgeräten TEA und TEB aufgebaut. Die Verbindungsanforderung wird beim Verbindungsaufbau über die Dienstvermittlungsstelle SSP geleitet, die ein Trigger-Ereignis erkennt und die Dienststeuereinheit SCP für die Verbindung triggert. Die Dienststeuereinheit SCP wählt unter den Netzbetreibern OP1 bis OP2, auf deren Tarif-Modell-Daten sie Zugriff hat, den Netzbetreiber OP2 aus, der entgeltpflichtige Dienste für die Verbindung erbringt und die Vergebührung für die Verbindung übernimmt. Anschließend berechnet die Dienststeuereinheit SCP mittels der Tarif-Modell-Daten des ausgewählten Netzbetreibers OP2 und mittels der Rufnummern der Teilnehmer A und B einen Tarif für die Verbindung. Die Dienststeuereinheit SCP sendet sodann eine Signalisierungsnachricht SM mit einer dem Tarif zugeordneten Tarifkennung über das Signalisierungsnetz des Teilnetzes SN1 zur Teilnehmervermittlungsstelle SUBSW des rufenden Teilnehmers A. Diese Signalisierungsnachricht steuert den Gebührenimpulsgeber, der in der Teilnehmervermittlungsstelle SUBSW der Teilnehmeranschlußleitung zum Endgerät TEA zugeordnet wird. Der Gebührenimpulsgeber erzeugt während des Bestehens der Verbindung zwischen den Teilnehmern A und B gemäß der mit der Signalisierungsnachricht empfangenen Tarifkennung Gebührenimpulse, die als Entgelt-Information CP von der Teilnehmervermittlungsstelle SUBSW an das Endgerät TEA gesendet werden. Es ist natürlich auch möglich, daß die Teilnehmervermittlungsstelle SUBSW andersartige Entgelt-Informationen (CP) an den Teilnehmer (A) sendet, beispielsweise Sprachansagen, im ISDN D-Kanal übertragene Entgeltdaten oder Anzeigetexte bei ISDN Endgeräten.

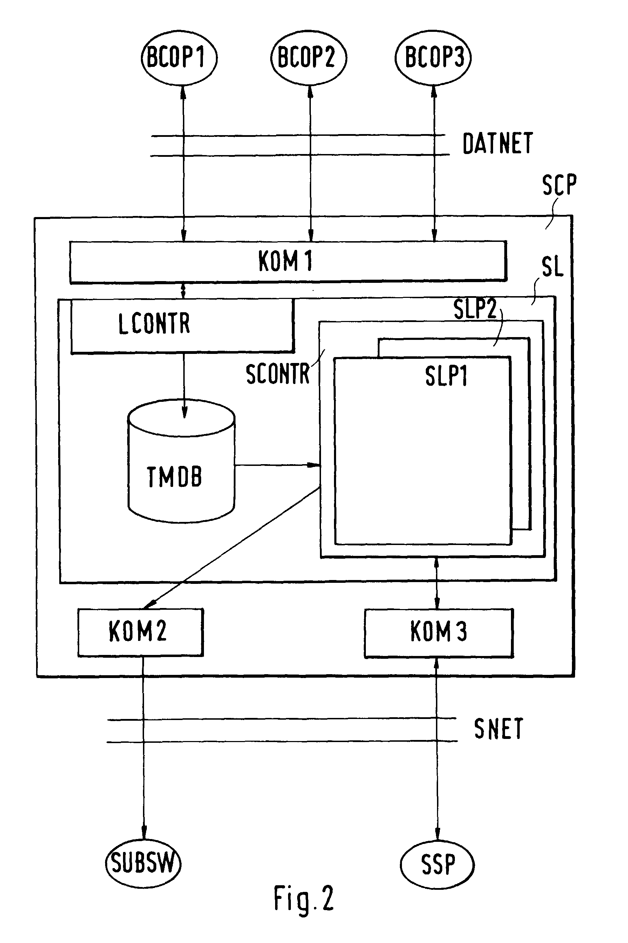

Im folgenden wird der genaue Aufbau und die Funktionsweise der Dienststeuereinheit SCP anhand von Fig. 2 erläutert.

Fig. 2 zeigt die Dienststeuereinheit SCP, die Teilnehmervermittlungsstelle SUBSW, die Dienstvermittlungsstelle SSP und drei Rechner BCOP1 bis BCOP3. Die Rechner BCOP1 bis BCOP3 kommunizieren über ein Kommunikationsnetz DATNET mit der Dienststeuereinheit SCP, die ihrerseits über ein Kommunikationsnetz SNET mit der Teilnehmervermittlungsstelle SUBSW und der Dienstvermittlungsstelle SSP kommuniziert.

Bei den Rechnern BCOP1 bis BCOP3 handelt es sich jeweils um einen Rechner der Vergebührungszentrale des Netzbetreibers OP1, OP2 bzw. OP3. In den Rechnern BCOP1 bis BCOP3 ist jeweils das aktuelle Tarif-Modell des jeweiligen Netzbetreibers OP1 bis OP3 abgespeichert. Weiter Verfügen die Rechner BCOP1 bis BCOP3 über periphere Baugruppen, die Ihnen die Kommunikation über das Kommunikationsnetz DATNET ermöglichen.

Bei dem Kommunikationsnetz DATNET handelt es sich um das Internet. Es ist natürlich auch möglich, daß es sich beim Kommunikationsnetz DATNET um ein beliebiges anderes Datennetz handelt, beispielsweise daß es sich bei ihm um ein MAN, LAN, X.25 Paketnetz oder auch um eine Signalisierungsnetz handelt.

Die Dienststeuereinheit SCP besteht aus ein oder mehreren miteinander verbundenen Rechnerplattformen, auf denen Applikationsprogramme aufsetzen, die die Funktionen der Dienststeuereinheit SCP erbringen. Aus funktioneller Sicht weist die Dienststeuereinheit SCP drei Kommunikationseinheiten KOM1 bis KOM3 und eine Dienstelogik SL auf.

Die Kommunikationseinheit KOM1 stellt die notwendigen Mechanismen zur Kommunikation mit den Rechnern BCOP1 bis BCOP3 zur Verfügung. Sie stellt hierfür u. a. Funktionen zur Bearbeitung der im Kommunikationsnetz DATNET verwendeten Transportprotokoll sowie des TCP/IP Protokolls (TCP = Transport Capability Protokoll, IP = Internet Protokoll). Weiter ermöglicht sie die Kommunikation zwischen den Rechnern BCOP1 bis BCOP3 und der Dienstelogik SL sowie den Zugriff der Rechner BCOP1 bis BCOP3 auf die Dienstelogik SL. Diese Funktion wird bei der Realisierung der Dienststeuereinheit SCP gemäß der IN Architektur vorteilhafterweises mittels der eines autorisierten Kundenzugangs realisiert.

Bei dem Kommunikationsnetz SNET handelt es sich um das Signalisierungsnetz des Teilnetzes SN1, des beispielsweise gemäß des ITU-T Signalisierungssystem Nr. 7 aufgebaut ist. Es ist auch möglich, daß es sich bei dem Kommunikationsnetz SNET um ein Datennetz, beispielsweise ein LAN oder ein ATM Netz handelt.

Die Kommunikationseinheit KOM3 führt Funktionen durch, die eine Interaktion mit den Dienstvermittlungsstelle des Teilnetzes SN1, insbesondere mit der Dienstvermittlungsstelle SSP über das Kommunikationsnetz SNET ermöglicht. Diese Funktionen umfassen Funktionen zur Bearbeitung der in dem Kommunikationsnetz SNET verwendeten Transportprotokolle, beispielsweise der Transportprotokolle des Signalisierungssystems Nr. 7. Auf diesen Funktionen setzen Funktionen auf, die das TCAP Protokoll des ITU-T Signalisierungssystem Nr. 7 und das darauf aufsetzende INAP Protokoll (TCAP = Transport Capabilities Application Part, INAP = Intelligent Network Applications Protocol) bearbeiten, mittels dem Dienstvermittlungsfunktionen und Dienststeuerfunktionen gemäß der IN-Architektur interagieren. Die im Rahmen dieses Protokolls ausgetauschten IN-Applikationsnachrichten (INAP Nachrichten) sowie die grundlegend Dienste und Aktionen dieses Protokolls werden beispielsweise in der Empfehlung ITU-T Q.1219, Kapitel 6.5. Intelligent Network Applications Protokoll, Seite 26 bis 40 und detaillierter in der Empfehlung ITU-T Q.1219 für IN CS-1 erläutert.

Die Kommunikationseinheit KOM2 dient dem Senden von Signalisierungsnachrichten über das Kommunikationsnetz SNET an Teilnehmervermittlungsstellen des Teil netzes SN1, insbesonders an die Teilnehmervermittlungsstelle SUBSW. Die Kommunikationseinheit KOM2 bearbeitet hierfür die in dem Kommunikationsnetz SNET verwendeten Transportprotokolle, beispielsweise die Transportprotokolle des Signalisierungssystems Nr. 7. Es ist auch möglich, auf die Kommunikationseinheit KOM2 zu verzichten. Die Dienstlogik SL weist in diesem Fall beispielsweise die Dienstvermittlungsstelle SSP anweisen, solche Signalisierungsnachrichten an eine Teilnehmervermittlungsstelle zu senden.

Die Dienstelogik SL steuert die Erbringung des Dienstes zur Bereitstellung von Entgelt-Information. Neben der Dienstelogik SL kann die Dienststeuereinheit SCP noch weitere Dienstelogika aufweisen, die andere Dienste steuern. Die Dienstelogik SL weist aus funktioneller Sicht zwei Steuereinheiten SCONTR und LCONTR und eine Speichereinheit TMDB auf.

In der Speichereinheit TMDB sind Tarif-Modell-Daten derjenigen Netzbetreiber des Telekommunikationsnetzes TKN abgespeichert, auf deren Tarif-Modell-Daten die Dienststeuereinheit SCP Zugriff hat.

Die Steuereinheit LCONTR interagiert einerseits mit den Rechnern BCOP1 bis BCOP3, empfängt von diesen Tarif-Modell-Daten und steuert andererseits mittels der so gewonnenen Informationen das Eintragen und Aktualisieren der Tarif-Modell-Daten in der Speichereinheit TMDB.

Auf die Speichereinheit TMDB kann natürlich auch verzichtet werden. In diesem Fall würde die Steuereinheit SCONTR, wenn sie Tarif-Modell-Daten benötigt, diese direkt von der Steuereinheit LCONTR anfordern, die wiederum eine entsprechende Anforderung an einen der Rechner BCOP1 bis BCOP3 richten würde. Eine weitere Möglichkeit besteht darin, daß die Speichereinheit TMDB und die Steuereinheit LCONTR teil eines (zentralen) Rechners ist, mit dem die Dienststeuereinheit SCP über ein Kommunikationsnetz verbunden ist.

Die Dienstelogik SL wird durch eine Dienstanforderungsnachricht, die den von ihr bereitgestellten Dienst zur Bereitstellung von Entgelt-Information adressiert, für eine Verbindung getriggert. Mit dem Triggern wird für die Verbindung ein Dienstlogikprozeß gestartet, der die Auswahl des oder der Netzbetreiber, die Berechnung eines Tarifs für die Verbindung sowie das Senden einer Signalisierungsnachricht mit einer Tarifkennung an eine Teilnehmervermittlungsstelle veranlaßt. Sind diese Funktionen für die Verbindung erbracht, so wird der Dienstlogikprozeß beendet. In Fig. 2 sind beispielhaft zwei Dienstlogikprozesse SLP1 und SLP2 gezeigt, der von der Dienstlogik SL bereitgestellte Dienst zur Bereitstellung von Entgelt-Information wird somit gerade parallel für zwei Verbindungen erbracht.

Im Folgenden wird eine erste Möglichkeit der Berechnung des einer Verbindung zuzuordnenden Tarifs beschrieben.

Die Rechner BCOP1 bis BCOP3 senden bei jeder Tarifänderung automatische ausführliche Tarif-Modell-Daten, die das gesamte Tarif-Modell des jeweiligen Betreibers beschreiben, an die Steuereinheit LCONTR. Diese Tarif-Modell-Daten beschreiben, welches Entgelt (Gebühren pro Zeiteinheit, Einmalgebühren) für welchen Dienst (Verbindungsdienst: Verbindungsentfernung, Eigenschaft des rufendend, gerufenen Teilnehmer, Dienstart, ...) unter welchen Bedingungen (Zeitpunkt, Netzauslastung, ...) einem Teilnehmer belastet werden. Die Steureinheit speichert die Empfangen Tarif-Modell Daten sodann entsprechend als Tarif-Modell-Daten des jeweiligen Netzbetreibers ab und überschreibt hierbei u. U. ältere Tarif-Modell Daten des Teilnehmers.

Es ist hierbei natürlich auch möglich, daß von den Rechnern BCOP1 bis BCOP3 jeweils nur der Teil der ausführlichen Tarif-Modell-Daten an die Steuereinheit LCONTR übergeben wird, der sich geändert hat. Weitere ist es auch möglich, daß die Steuereinheit LCONTR ihrerseits in regelmäßigen Abständen Tarif-Modell-Daten von den Rechnern BCOP1 bis BCOP3 abfragt und Änderungen in der Speichereinheit TMDB veranlaßt, wenn sie Änderungen in Tarif-Modellen von Teilnehmer erkennt.

Mittels in der Verbindungsanforderung enthaltener Daten wählt die Steuereinheit SCONTR aus den Netzbetreibern, deren Tarif-Modell-Daten in der Speichereinheit TMDB abgespeichert sind, den für die Verbindung zuständigen Verbindungsnetzbetreiber aus. Der zuständige Verbindungsnetzbetreiber kann hierbei vom Teilnehmer selbst für jede Verbindung einzeln festgelegt werden, beispielsweise durch Vorwahl eines bestimmten Prefixes. Der Verbindungsnetzbetreiber kann jedoch auch für alle Rufe eines bestimmten Teilnehmers fest vorgegeben sein oder es kann für jede Verbindung der für sie günstigste Verbindungsnetzbetreiber bestimmt und ausgewählt werden.

Es ist auch möglich, daß mittels der Rufnummer des rufenden und des gerufenen Teilnehmers der Verbindung, die der Steuereinheit SCONTR von der Dienstvermittlungsstelle SSP übermittelt werden, die Steuereinheit SCONTR aus den Netzbetreibern, deren Tarif-Modell-Daten in der Speichereinheit TMDB abgespeichert sind, Netzbetreiber auswählt, die einen Dienst für die Verbindung erbringen. Dies sind vorteilhafterweise diejenigen an der Verbindung beteiligten Verbindungsnetzbetreiber oder Dienstbetreiber, die eine explizite Vergebührung von Diensten für die durch die rufende und gerufene Rufnummer definierte Verbindung durchführen. Die Steuereinheit SCONTR greift sodann auf die in der Speichereinheit TMDB abgespeicherten Tarif-Modell-Daten dieser ausgewählten Netzbetreiber zu und ermittelt gemäß den Angaben aus dem jeweiligen Tarif-Modell mittels Daten über den rufenden und den gerufenen Teilnehmer, insbesondere deren Rufnummern, und nach Maßgabe des Tarifs aus sonstigen Daten, wie beispielsweise Angaben über den augenblicklichen Zeitpunkt, den für die Verbindung zu veranschlagenden netzbetreiberspezifischen Tarif. Der ermittelte netzbetreiberspezifische Tarif wird sodann in netzbetreiberunspezifischer Form, beispielsweise als Entgelt pro Zeiteinheit, aus den Tarif-Modell-Daten ausgelesen. Die so berechneten Tarife für die ausgewählten Netzbetreiber werden sodann addiert und dem so bestimmten Tarif für die Verbindung wird eine für die Teilnehmervermittlungsstellen verständliche, da gleichdefinierte Tarifkennung zugeordnet. Solch eine Tarifkennung besteht aus einem beidseitig definierten Parameter, beispielsweise einem Integer Wert, der Entgelt pro Zeiteinheit angibt oder einem Wert, der einen beidseitig definierten Tarif adressiert.

Die Tarifkennung kann beispielsweise als Chargeband No. in einer Nr. 7 Signalisierungsnachricht transportiert werden.

Es ist hierbei möglich, daß die Steuereinheit SCONTR der Summe der für die ausgewählten Netzbetreiber berechneten Tarife einen Tarif aus einem Satz von zwischen Dienststeuereinheit SCP und Teilnehmervermittlungsstellen vereinbarten vordefiniertenTarifen zuordnet, das Ergebnis der Tarifberechnung also auf ein Tarifraster abbildet. Dies hat den Vorteil, daß nur ein entsprechend kleiner Satz von Tarifkennungen zwischen Dienststeuereinheit und Teilnehmervermittlungsstellen vereinbart werden muß und somit eine einfache Adressierung beidseitig definierter Tarife möglich wird. Das Tarifraster und somit der Satz von Tarifen kann hierbei so definiert werden, daß nicht in jedem Fall eine korrekte Abbildung möglich ist und somit nur eine näherungsweise korrekt Entgelt-Information erfolgt.

Weiter ist es möglich, daß der Satz der zwischen Dienststeuereinheit und Teilnehmervermittlungsstellen vereinbarten vordefinierten Tarife aus den netzbetreiberspezifischen Tarifen des Netzbetreibers besteht, der die Teilnehmervermittlungsstelle des rufenden Teilnehmers spezifiziert. Die Steuereinheit SCONTR führt somit eine Abbildung der netzbetreiberspezifischen Tarife der ausgewählten Netzbetreiber auf das netzbetreiberspezifische Tarifraster des Teilnehmervermittlungsstellen-Netzbetreibers durch. Dies hat den Vorteil, daß zur Integration der Erfindung nur sehr geringe Anpassungen in den Teilnehmervermittlungsstellen durchzuführen sind.

Im Folgenden wird eine zweite Möglichkeit der Berechnung des einer Verbindung zuzuordnenden Tarifs beschrieben.

Die Rechner BCOP1 bis BCOP3 senden bei jeder Tarifänderung automatische oder auf Anweistung des jeweiligen Netbetreibers OP1, OP2 bzw. OP3 Tarif-Modell-Daten an die Steuereinheit LCONTR. Die Steuereinheit LCONTR berechnet aus diesen Tarif-Modell-Daten eine Tarif-Modell-Abbildungsmatrix, die die netzbetreiberspezischen Tarife der Netzbetreibern OP1 bis OP3 jeweils auf einen Tarif aus einem Satz von zwischen Dienststeuereinheit und Teilnehmervermittlungsstellen vereinbarten Vordefinierten Tarifen abbildet. Mittels dieser Abbildungsmatrix werden somit netzbetreiberspezifische Tarife auf ein netzbetreiberunspezifisches Tarifraster abgebildet. Die Tarif-Modell-Daten der Netzbetreiber liegen in der Speichereinheit bereits in aufbereiteter Form vor und der von der Steuereinheit SCONTR zu erbringende Rechenaufwand wird verringert. In der Tarif-Modell-Abbildungsmatrix kann hierbei zu einem betreiberspezifischen Tarif bereits jeweils die zuzuordnende betreiberunspezifische Tarifkennung eingetragen sein.

Es ist hierbei auch möglich, daß die Rechnern BCOP1 bis BCOP3 jeweils selbst den ihrem jeweiligen Netzbetreiber zugeordneten Teil der Tarif-Modell-Abbildungsmatrix festlegen und somit selbst bestimmten, welche Tarife aus dem Tarifraster welchen ihrer Tarife u. U. näherungsweise zuzuordnen sind.

Im folgenden wird ein weiterer möglicher Aufbau einer erfindungsgemäßen Dienststeuereinheit sowie eine weitere mögliche Durchführungsform des erfindungsgemäßen Verfahrens anhand von Fig. 2 erläutert.

Fig. 2 zeigt drei Dienststeuereinheit SCP1 bis SCP3, die Teilnehmervermittlungsstelle SUBSW, die Dienstvermittlungsstelle SSP, die drei Rechner BCOP1 bis BCOP3 sowie eine Dienstverwaltungseinheit SMP. Die Rechner BCOP1 bis BCOP3 kommunizieren über das Kommunikationsnetz DATNET mit der Dienstverwaltungseinheit SMP, die ihrerseits mit den Dienststeuereinheiten SCP1 bis SCP3 kommuniziert. Die Zahl der Dienststeuereinheiten SCP1 bis SCP3 ist beispielhaft gewählt. Sie kommuniziert über das Kommunikationsnetz SNET mit Teilnehmervermittlungsstellen und Dienstvermittlungsstellen, beispielsweise mit der Teilnehmervermittlungsstelle SUBSW und der Dienstvermittlungsstelle SSP.

Die Dienstverwaltungseinheit SMP wird von ein oder mehreren miteinander verbundenen Rechnern gebildet, die eine Dienstverwaltungsfunktionen für die Dienststeureinheiten SCP1 bis SCP3 durchführen. Sie ist beispielsweise gemäß der IN Architektur aufgebaut. In die Dienstverwaltungseinheit SMP sind zusätzlich zu diesen Funktionen die Kommunikationseinheit KOM1, die Steuereinheit LCONTR und die Speichereinheit TMDB nach Fig. 2 integriert.

Der Aufbau der Dienststeuereinheiten SCP1 bis SCP3 wird beispielhaft anhand der Dienststeuereinheit SCP1 erläutert: Die Dienststeuereinheit SCP1 ist wie die Dienststeuereinheit SCP nach Fig. 2 aufgebaut, mit dem Unterschied, daß sie eine Dienstelogik SL' anstelle der Dienstelogik SL aufweist, die neben der Steuereinheit SCONTR nach Fig. 2 eine Speichereinheit RDB1 umfaßt. Bei der Speichereinheit RDB1 handelt es sich um eine Echtzeitdatenbank. Die Speichereinheit TMDB hat in diesem Ausführungsbeispiel die Rolle einer Master-Datenbank, die die Speichereinheit RDB1 und die ihr entsprechenden Speichereinheiten der Dienststeuereinheiten SCP1 bis SCP3 mit Tarif-Modell-Daten versorgt.

## Patentansprüche

1. Verfahren um einem Teilnehmer (A) eines Telekommunikationsnetzes (TKN), das von verschiedenen Netzbetreibern (OP1 bis OP3) zugeordneten Teil-Telekommunikationsnetzen (SN1 bis SN3) gebildet wird, Entgelt-Informationen (CP) bereitzustellen,
**dadurch gekennzeichnet**, daß während des Aufbaus einer von dem Teilnehmer als rufendem Teilnehmer (A) zu einem gerufenen Teilnehmer (B) veranlaßten Verbindung eine Dienststeuereinheit (SCP) getriggert wird, daß die Dienststeuereinheit (SCP) aus einer Vielzahl von Netzbetreibern (OP1 bis OP3), auf deren Tarif-Modell-Daten sie Zugriff hat, einen Netzbetreiber (OP2) oder mehrere Netzbetreiber auswählt, die einen Dienst für die Verbindung erbringen, daß die Dienststeuereinheit (SCP) mittels der Tarif-Modell-Daten des ausgewählten Netzbetreibers (OP2) oder der ausgewählten Netzbetreiber und mittels Daten über den rufenden und den gerufenen Teilnehmer (A, B) der Verbindung einen Tarif für die Verbindung berechnet, daß die Dienststeuereinheit (SCP) eine Signalisierungsnachricht (SM) mit einer dem Tarif zugeordneten Tarifkennung zur Teilnehmervermittlungsstelle (SUBSW) des Teilnehmers (A) sendet, die gemäß der von der Dienststeuereinheit (SCP) empfangenen Tarifkennung Entgelt-Informationen (CP) an den Teilnehmer (A) sendet.

2. Verfahren nach Anspruch 1, dadurch gekennzeichnet, daß die Dienststeuereinheit (SCP) bei der Berechnung des Tarifs einen Tarif aus einem Satz von zwischen Dienststeuereinheit (SCP) und
Teilnehmervermittlungsstelle (SUBSW) vereinbarten vordefinierten Tarifen auswählt und eine dem ausgewählten Tarif zugeordneten Tarifkennung zur Teilnehmervermittlungsstelle (SUBSW) sendet.

3. Verfahren nach Anspruch 2, dadurch gekennzeichnet, daß der Satz von Tarifen so vordefiniert wird, daß die Entgelt-Information näherungsweise korrekt ist.

4. Verfahren nach Anspruch 1, dadurch gekennzeichnet, daß die Dienststeuereinheit (SCP) zur Durchführung der Auswahl denjenigen oder diejenigen Netzbetreiber (OP2) ermittelt, die eine Vergebührung für die Verbindung durchführen.

5. Verfahren nach Anspruch 1, dadurch gekennzeichnet, daß die Dienststeuereinheit (SCP) den vom Teilnehmer gewählten Verbindungsnetzbetreiber (OP2) als Netzbetreiber aus der Vielzahl von Netzbetreibern (OP1 bis OP3), auf deren Tarif-Modell-Daten sie Zugriff hat, auswählt.

6. Verfahren nach Anspruch 1, dadurch gekennzeichnet, daß die Tarif-Modell-Daten derjenigen Netzbetreibern (OP1 bis OP3), auf deren Tarif-Modell-Daten die Dienststeuereinheit Zugriff hat, jeweils von einem dem jeweiligen Netzbetreiber zugeordneten Rechner (BCOP1 bis BCOP3) an die Dienststeuereinheit (SCP) übermittelt werden.

7. Verfahren nach Anspruch 5, dadurch gekennzeichnet, daß die Tarif-Modell-Daten über einen IN Kundenzugang an die Dienststeuereinheit (SCP) übermittelt werden.

8. Verfahren nach Anspruch 1, dadurch gekennzeichnet, daß die Dienststeuereinheit (SCP) aus übermittelten Tarif-Modell-Daten eine Tarif-Modell-Abbildungsmatrix ermittelt, die netzbetreiberspezische Tarife der Vielzahl von Netzbetreibern (OP1 bis OP3), auf deren Tarif-Modell-Daten die Dienststeuereinheit (SCP) Zugriff hat, jeweils auf einen Tarif aus einem Satz von zwischen Dienststeuereinheit (SCP) und
Teilnehmervermittlungsstelle (SUBSW) vereinbarten vordefinierten Tarifen abbildet.

9. Verfahren nach Anspruch 1, dadurch gekennzeichnet, daß eine Dienstverwaltungseinheit (SMP) aus übermittelten Tarif-Modell-Daten eine Tarif-Modell-Abbildungsmatrix ermittelt, die netzbetreiberspezische Tarife der Vielzahl von Netzbetreibern (OP1 bis OP3), auf deren Tarif-Modell-Daten die Dienststeuereinheit (SCP1 bis SCP3) Zugriff hat, jeweils auf einen Tarif aus einem Satz von zwischen Dienststeuereinheit (SCP1 bis SCP3) und Teilnehmervermittlungsstelle (SUBSW) vereinbarten vordefinierten Tarifen abbildet, und daß die Dienstverwaltungseinheit (SMP) die ermittelte Tarif-Modell-Abbildungsmatrix als Tarif-Modell-Daten an die Dienststeuereinheit (SCP1 bis SCP3) übermittelt.

10. Verfahren nach Anspruch 1, dadurch gekennzeichnet, daß als Tarif-Modell-Daten der Dienststeuereinheit (SCP) von einem Netzbetreiber (OP1 bis OP3) zugeordneten Rechner (BCOP1 bis BCOP3) Daten übermittelt werden, die netzbetreiberspezifische Tarife jeweils auf einen Tarif aus einem Satz von zwischen Dienststeuereinheit (SCP) und
Teilnehmervermittlungsstelle (SUBSW) vereinbarten vordefinierten Tarifen abbilden, und daß die Dienststeuereinheit (SCP) mittels dieser Daten eine Tarif-Modell-Abbildungsmatrix bildet.

11. Verfahren nach einem der Ansprüche 8 bis 10, dadurch gekennzeichnet, daß die Dienststeuereinheit (SCP) bei der Berechnung des Tarifs für die Verbindung mittels der Daten über den rufenden und den gerufenen Teilnehmer (A, B) einen jeweiligen netzbetreiberspezifischen Tarif bestimmt und diesen netzbetreiberspezifischen Tarif mittels der Tarif-Modell-Abbildungsmatrix auf einen Tarif aus dem Satz von vordefinierten Tarifen abbildet.

12. Verfahren nach Anspruch 1, dadurch gekennzeichnet, daß die Teilnehmervermittlungsstelle (SUBSW) als Entgelt-Informationen (CP) Gebührenimpulse an den Teilnehmer (A) sendet.

13. Verfahren nach Anspruch 1, dadurch gekennzeichnet, daß die Dienststeuereinheit (SCP) nur getriggert wird, wenn der rufende Teilnehmer (A) und der gerufene Teilnehmer (B) verschiedenen Netzbetreibern zugeordnet sind.

14. Verfahren nach Anspruch 1, dadurch gekennzeichnet, daß die Dienststeuereinheit (SCP) nur getriggert wird, wenn der rufende Teilnehmer (A) als Nutzer des von der Dienststeuereinheit (SCP) bereitgestellten Dienstes zur Entgeltenbereitstellung definiert ist.

15. Dienststeuereinheit (SCP; SCP1 bis SCP3) zur Bereitstellung von Entgelt-Informationen (CP) in einem Telekommunikationsnetz (TKN), das mit verschiedenen Netzbetreibern (OP1 bis OP3) zugeordneten Teil-Telekommunikationsnetzen (SN1 bis SN3) versehen ist,
**dadurch gekennzeichnet**, daß die Dienststeuereinheit (SCP; SCP1 bis SCP3) mit einer Dienstelogik (SL; SL') versehen ist, die so ausgestaltet ist, daß sie, wenn sie beim Aufbau einer von einem rufenden Teilnehmer (A) zu einem gerufenen Teilnehmer (B) veranlaßten Verbindung für die Verbindung getriggert wird, aus einer Vielzahl von Netzbetreibern (OP1 bis OP3), auf deren Tarif-Modell-Daten sie Zugriff hat, einen Netzbetreiber (OP2) oder mehrere Netzbetreiber auswählt, die einen Dienst für die Verbindung erbringen, daß sie sodann weiter mittels der Tarif-Modell-Daten des ausgewählten Netzbetreibers (OP2) oder der ausgewählten Netzbetreiber und mittels Daten über den rufenden und den gerufenen Teilnehmer (A, B) der Verbindung einen Tarif für die Verbindung berechnet, und daß sie sodann weiter das Senden einer Signalisierungsnachricht (SM) mit einer dem Tarif zugeordneten Tarifkennung zur Teilnehmervermittlungsstelle (SUBSW) des rufenden Teilnehmers (A) veranlaßt und diese veranlaßt, gemäß der empfangenen Tarifkennung Entgelt-Informationen (CP) an den Teilnehmer (A) zu senden.
